(19) Europäisches Patentamt
European Patent Office
Office européen des brevets

(11) **EP 2 704 082 A1**

(12) **EUROPEAN PATENT APPLICATION**

(43) Date of publication:
**05.03.2014 Bulletin 2014/10**

(51) Int Cl.:
***G06Q 30/02*** *(2012.01)*

(21) Application number: **12181903.1**

(22) Date of filing: **27.08.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Tata Consultancy Services Limited 400021 Mumbay (IN)**

(72) Inventors:
• **Padmanabhan, Kishore 600 086 Chennai (IN)**

• **Ramanan, Sharadha 600 086 Chennai (IN)**
• **Rao, Shilpa 600 096 Chennai (IN)**

(74) Representative: **Manitz, Finsterwald & Partner GbR Martin-Greif-Strasse 1 80336 München (DE)**

(54) **Assortment planning and optimization**

(57)    The present subject matter relates to systems and methods for assortment planning and optimization in a retail environment. In one implementation, a method for assortment planning and optimization is described. The method includes receiving assortment parameter data, and input information. The input information includes performance data, product data, fixture data and store data. Further, the method includes ranking product items based at least on the assortment parameter data and the input information. Furthermore, the method includes creating a listing of the product items based at least on the ranking. Such listing of the product items is processed based at least on predefined business rules, to generate one or more assortment solutions for providing optimal gross margins.

EP 2 704 082 A1

**Description**

TECHNICAL FIELD

The present subject matter described herein, in general, relates to merchandised assortment planning and, in particular, relates to systems and methods for assortment planning and optimization of merchandize assortments within a retail environment.

BACKGROUND

In general, retail businesses involve buying and selling a variety of merchandise. In order to boost sales of their merchandise, sellers rely on a variety of mechanism that would enable them to augment the sales of their merchandise. Examples of such mechanisms include advertising that aim to expose target consumers to the availability, advantages, Unique Selling Propositions (USPs), etc., of such merchandize, thereby attracting attention of the consumers and increasing the chances of a prospective sale.

Despite the advent of online shopping, retail stores still remains one of the primary centers where such merchandize are sold. At such retail stores, the various merchandize are arranged in a typical manner. In such a case, merchandize which is sought most by consumers, may be placed either close to an entry door of the retail stores, or can be placed in locations within the stores which are more readily accessible as compared to other locations within the stores.

In such a case, various merchandize can be arranged as per an assortment plan. The assortment plan may provide inputs to the retailers to decide the manner in which product items have to be merchandized, and in which store and/or store groups. Such an assortment plan is likely to result in increased sales or gross margin of a retail store subject to various constraints, such as a limited budget for purchase of products, limited shelf space for displaying products, integer number of products, and a variety of miscellaneous constraints, such as a desire to have at least two vendors for each type of product.

As will be appreciated, assortment planning has an enormous impact on the sales and gross margin of the retail stores. Thus, assortment planning is of high priority for retailers. An effective assortment planning process or coming up with a best suited assortment plan is necessary in retail environments as the retail environments often require to adjust their business according to relatively fickle needs of the consumers.

SUMMARY

This summary is provided to introduce concepts related to assortment planning and optimization in a retail environment and the concepts are further described below in the detailed description. This summary is not intended to identify essential features of the claimed subject matter nor is it intended for use in determining or limiting the scope of the claimed subject matter.

In one implementation, a method for assortment planning and optimization is described. The method includes receiving assortment parameter data, and input information. The input information includes performance data, product data, fixture data, and store data. Further, the method includes ranking product items based at least on the assortment parameter data and the input information. Furthermore, the method includes creating a listing of the product items based at least on the ranking. Such listing of the product items is processed based at least on predefined business rules, to generate one or more assortment solutions for providing optimal gross margins.

BRIEF DESCRIPTION OF THE DRAWINGS

The detailed description is provided with reference to the accompanying figures. In the figures, the left-most digit(s) of a reference number identifies the figure in which the reference number first appears. The same numbers are used throughout the drawings to reference like features and components.

Fig. 1 illustrates a network environment implementing an assortment planning and optimization system, in accordance with an embodiment of the present subject matter.

Fig. 2 illustrates an assortment planning and optimization system, in accordance with an embodiment of the present subject matter.

Fig. 3 illustrates a method for assortment planning and optimization, in accordance with an embodiment of the present subject matter.

DETAILED DESCRIPTION

The present subject matter relates to systems and methods for assortment planning and optimization in a retail environment. As indicated previously, assortment planning provides retailers with a variety of plans in which various merchandize can be arranged within a retail store or across multiple retail stores. As also discussed, assortment planning may directly impact the sales and gross margins of the retail stores. Therefore, it becomes essential for the retailers to determine the best possible assortment plan which will result in better profit margins.

Conventional assortment planning systems provide assortment plans based on various fixed parameters, such as fixed shelf space, etc. In such a case, the assortment plan so provided may be based on a trade-off between different types of considerations such as different categories of merchandize to carry, quantity of merchandize items to be carried in each category, and how much inventory to stock for each merchandize item. This breadth versus depth trade-off is one of the most important strategic choices faced by all retailers.

Such conventional systems also do not tend to offer the required flexibility to prioritize various other aspects. For example, conventional systems may fail to consider assortment planning based on variety or availability of various product categories, or provide assortment plans based on a defined role or importance of the product category within a group of different product categories. Moreover, such conventional systems provide assortment plans that are static and are not configurable based on various economic or consumer based changes, such as changes in consumer taste, and booming economy.

Further, such conventional systems offer only a single assortment plan for use across a plurality of retail stores across a geographic area. Therefore, such assortments may not be best suited for the needs of the local population in different geographic locations. Furthermore, assortments being carried by the retail stores as per such conventional assortment planning may result in a large number of merchandize items being stocked within the retail store, thereby increasing the inventory cost. As will be evident, systems and methods that are based on the different consideration, as described above, and are more flexible and provide assortment plans that are more conforming to the ever changing requirements, are needed.

In accordance with the present subject matter, system and methods for generating assortment plans/solutions are described. The assortment plans are generated based on at least one or more parameters such as space elasticity, cross elasticity, customer choice sets and assortment strategy. These assortments related parameters are relevant from the retailer's perspective for assortment planning. In one implementation, the assortment plans are generated based on a plurality of cost parameters, such as average inventory costs, costs due to lost sales, minimum facing costs, wastage costs, spoilage costs, backroom costs, stockout costs, variety bonus and other penalties. It should be noted that assortment plans generated based on the cost parameters further optimize overall gross margins for the retail stores.

In one implementation, to generate the assortment plans, input information, such as a user defined name for an assortment plan, validity period for the assortment plan, performance data, product data, fixture data, store data is received. Along with the input information, assortment parameter data is also received. In one implementation, the assortment parameter data includes, but is not limited to, values or details indicative of space elasticity, cross elasticity, customer choice sets and assortment strategy. The space elasticity may be understood as a parameter that captures a relationship between an increase in space given to a product hierarchy and the resulting increase in sales. Likewise, the cross elasticity may be understood as a measure of the responsiveness of demand of a product due to a change in the price of another product, and the customer choice sets may be understood as the set of products in the absence of which the customer leaves the store without buying anything. Additionally, the assortment parameter data may also include details pertaining to demand transfer, i.e., transfer of demand between the products. Such details may include percentage of demand transfer.

In another implementation, once the input information is received, the products or the merchandize items are ranked based on input information and assortment parameter data. For the present implementation, merchandize items (interchangeably referred to as product items) can also be ranked based on one or more predefined business rules. In another implementation, the merchandize items can then be listed/delisted based on the ranking. The listing/delisting of the products may be understood as selecting/rejecting the merchandize items for assortment planning and optimization.

Once the merchandize items are ranked, a plurality of assortment solutions or assortment plans for the merchandize items under consideration, can be generated based on one or more predefined business rules and constraints. In one implementation, assortment plans can be generated based on a genetic algorithm. In another implementation, the set of the plurality of the generated assortment plans can be further optimized.

The assortment planning and optimization system of the present subject matter therefore enables the users, such as retailers to match the right products with the right store at the right times, and provide optimal assortment solutions that helps the users to maximize overall gross margins of the retail store.

Furthermore, the users may also perform assortment analysis on the obtained assortment solutions. In an implementation, the retailers may obtain different scenarios by modifying some of the parameters or inputs in the assortment planning and optimization and study their effects. Performing assortment analysis may result in obtaining the assortment solutions with corresponding changed set of product units, number of facings and changed ranking of the products. By performing assortment analysis, users may come up with the most relevant solution to the retailer's specific problem.

In another implementation, the assortment planning and optimization includes generating assortment plans for a cluster or group of retail stores. The retails stores may be clustered based on various characteristics, such as store capacity, geographical location of the stores, climatic zone of the stores, to name a few. In such a case, a unique identifier may be associated with each cluster. Depending on various factors and the cost parameters provided above, one or more assortment plans can be generated. It would be appreciated by a person skilled in the art, that such geographic pertinent assortment plans can be generated for geographic regions that extend beyond continents or even globally.

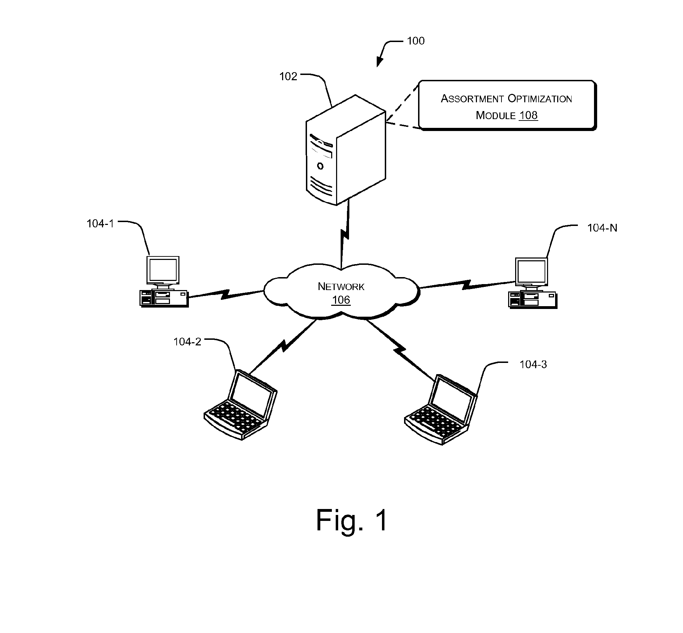

The manner, in which assortment planning and optimization is performed shall be explained in detail with respect to Fig. 1 to Fig. 3. While aspects of systems and methods can be implemented in any number of different computing systems, environments, and/or configurations, the embodiments are described in the context of the following exemplary system architecture(s).

Fig. 1 illustrates a network environment 100 implementing an assortment planning and optimization system 102, in accordance with an embodiment of the present subject matter. In said embodiment, the assortment planning and optimization system 102 is connected to a plurality of user devices 104-1, 104-2, 104-3 ...104-N, collectively referred to as the user devices 104 and individually referred to as a user device 104. The assortment planning and optimization system 102 and the user devices 104 may be implemented as any of a variety of conventional computing devices, including, for example, servers, a desktop PC, a notebook or portable computer, a workstation, a mainframe computer, an entertainment device, and an internet appliance.

The assortment planning and optimization system 102 is connected to the user devices 104 over a network 106 through one or more communication links. The communication links between the assortment planning and optimization system 102 and the user devices 104 are enabled through a desired form of communication, for example, via dial-up modem connections, cable links, digital subscriber lines (DSL), wireless or satellite links, or any other suitable form of communication.

In one implementation, the network environment 100 can be a company network, including thousands of office personal computers, laptops, various servers, such as blade servers, and other computing devices connected over the network 106. In another implementation, the network environment 100 can be a home network with a limited number of personal computers and laptops connected over the network 106. The network 106 may be a wireless network, a wired network, or a combination thereof. The network 106 can also be an individual network or a collection of many such individual networks, interconnected with each other and functioning as a single large network, e.g., the Internet or an intranet. The network 106 can be implemented as one of the different types of networks, such as intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), etc., to communicate with each other. Further, the network 106 may include network devices, such as network switches, hubs, routers, HBAs, for providing a link between the assortment planning and optimization system 102 and the user devices 104.

The network devices within the network 106 may interact with the assortment planning and optimization system 102 and the user devices 104 through the communication links. The users, such as retailers may interact through the user devices 104 with the assortment planning and optimization system 102 for generating optimal assortment plans for a store or a group of stores.

In an implementation, the assortment planning and optimization system 102 receives performance data, product data, fixture data, and store data as input information. In addition to the input information, the assortment planning and optimization system 102 further receives assortment parameter data, such as details or values pertaining to space elasticity, cross elasticity, customer choice sets, demand transfer and assortment strategy. Subsequent to receiving the input information and assortment parameter data, the assortment planning and optimization system 102 ranks the products or merchandised items based on such input information and assortment parameter data. In one implementation, the ranking of the products or merchandized items may be based on one or more predefined business rules.

Once the product or merchandised items are listed or delisted based on the ranking, a plurality of assortment plans may be generated based on one or more predefined rules and constraints. In one implementation, the assortment planning and optimization system 102 includes an assortment optimization module 108 that processes the listed product items by applying one or more predefined business rules. The assortment planning and optimization module 108 may perform such processing prior to generation of the assortment plans and/or after the generation of assortment plans. Based on the processing, the assortment optimization module 108 generates a plurality of assortment plans. As would be appreciated by a person skilled in the art, the assortment plan thus generated may be used, say by the retail manager for arranging the merchandize items within a retail store.

Further, the assortment optimization module 108 optimizes the assortment plans to generate a set of optimized assortment plans, such as top ten assortment plans, by applying one or more predefined business rules and satisfying one or more business constraints. The optimized assortment plans thus generated provides optimal gross margins for a store or a group of stores.

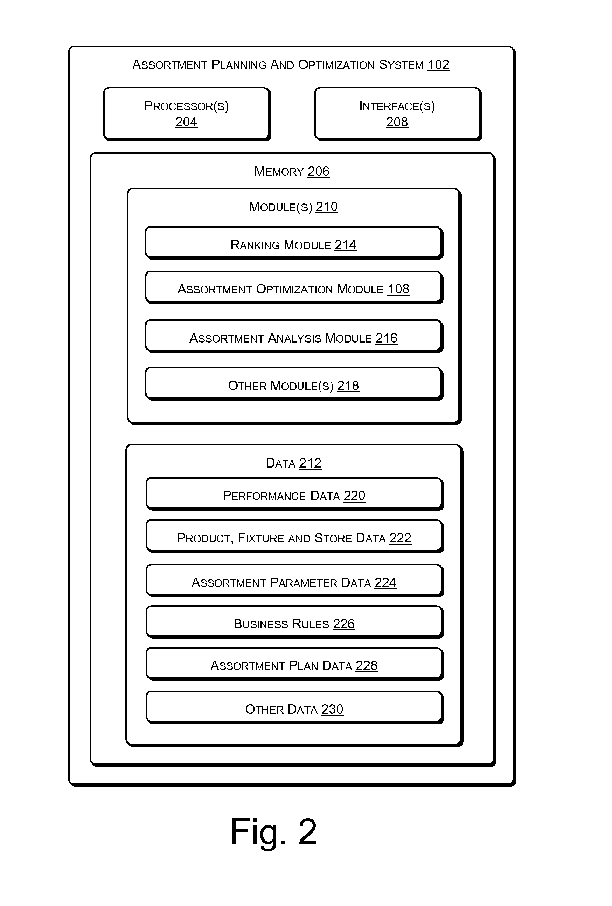

Fig. 2 illustrates components of the assortment planning and optimization system 102, according to an embodiment of the present subject matter. In said embodiment, the assortment planning and optimization system 102 includes one or more processor(s) 204, a memory 206 coupled to the processor 204, and interface(s) 208.

The processor 204 can be a single processing unit or a number of units, all of which could include multiple computing units. The processor 204 may be implemented as one or more microprocessors, microcomputers, microcontrollers, digital signal processors, central processing units, state machines, logic circuitries, and/or any devices that manipulate signals based on operational instructions. Among other capabilities, the processor 204 is configured to fetch and execute computer-readable instructions and data stored in the memory 206.

The interfaces 208 may include a variety of software and hardware interfaces, for example, interface for peripheral device(s) such as a keyboard, a mouse, an external memory, a printer, etc. Further, the interfaces 208 may enable the assortment planning and optimization system 102 to communicate with other computing devices, such as web servers and external databases. The interfaces 208 may facilitate multiple communications within a wide variety of protocols and networks, such as a network, including wired networks, e.g., LAN, cable, etc., and wireless networks, e.g., WLAN, cellular, satellite, etc. The interfaces 208 may include one or more ports for connecting the assortment planning and optimization system 102 to a number of computing devices.

The memory 206 may include any computer-readable medium known in the art including, for example, volatile memory such as static random access memory (SRAM) and dynamic random access memory (DRAM), and/or non-volatile memory, such as read only memory (ROM), erasable programmable ROM, flash memories, hard disks, optical disks, and magnetic tapes. The memory 206 also includes module(s) 210 and data 212.

The modules 210 include routines, programs, objects, components, data structures, etc., which perform particular tasks or implement particular abstract data types. The modules 210 further include, for example, a ranking module 214, an assortment optimization module 108, an assortment analysis module 216, and other module(s) 218. The other module(s) 218 may include programs or coded instructions that supplement applications and functions on the assortment planning and optimization system 102, for example, programs in the operating system.

Data 212, amongst other things, serves as a repository for storing data processed, received, and generated by one or more of the module(s) 210. The data 212 includes, for example, performance data 220, product, fixture and store data 222, assortment parameter data 224, rules 226, assortment plan data 228, and other data 230. The other data 230 includes data generated as a result of the execution of one or more modules in the other modules 218.

In operation, the assortment planning and optimization system 102 receives input information and assortment parameter data 224. As described previously, the input information may include performance data 220, product, fixture and store data 222. The input information can be provided by one or more users, such as retailers or can be gathered from external data storage devices storing such data. The assortment parameter data 224 comprises details or values pertaining to space elasticity, cross elasticity, customer choice sets, demand transfer and assortment strategy. Before we may describe the working of the assortment planning and optimization system 102, a brief description of the input information and assortment parameter data 224 is provided.

As described previously, the input information includes performance data such as performance data 220, and product data, fixture data, and store data 222. The performance data 220, for example, may include regular performance details, forecasted performance details, and promotional performance details. The performance data may be indicative of the store's sales dollar, store's sales unit, and gross margin. In other words, the performance data indicates about the performance of the store. In one implementation, the product, fixture and store data 222, for example, may include product/item description, product hierarchy, product features, product size details, fixture details, promotional performance/sales details, store details, penalty values, rule values, etc. As would be appreciated by a person skilled in the art, the product description may further include product code, product number or product identifier, an indicator for indicating if the product is new or old, shelf life of product, maximum and minimum number of facings per product, listed days, mandatory product or not, unit cost and unit retail of the product.

Furthermore, the product data, fixture data, and store data 222 may indicate a product hierarchy. The product hierarchy, as is conventionally known, may describe the category, sub category, class and sub class of the merchandize product. Likewise, other attributes, such as product features, brand names, physical attributes such as size, gross weight, etc., can be gathered from the product, fixture, and store data 222. In another implementation, the store data includes the unique identifier corresponding to a cluster one or more specific assortments. The store data further includes delivery type, replenishment frequency, category rule, case pack size, minimum and maximum days of supply, availability and other supply chain related information.

The fixture details describe a fixture type, a height of shelves, a width of shelves, a depth of shelves and total number of available shelves. In an implementation, the input information may also include a presentation minimum facings and presentation minimum units, average company sales dollars, average company sales units, penalty values, such as stock out penalty and variety bonus penalty, rules related penalties, such as minimum space delist, maximum group space penalty. Further, the category role related parameter values, and ranking related parameter values, such as inventory weight, excess inventory weight are also included in the input information. It should be noted that the assortment planning and optimization system 102 is flexible enough to include a variety of parameters based on which one or more assortment plans can be generated.

On the other hand, the assortment parameter data 224, for example, include details or values pertaining to space elasticity, cross elasticity, demand transfer, and customer choice sets. The space elasticity may be understood as a parameter that captures a relationship between an increase in space given to a product line and the resulting increase in sales. The space elasticity therefore enables the retailers to leave no holes in a planogram. As mentioned previously, the planogram is a known tool that enables retailers to visualize their assortment planning in a graphical form. The planogram with no holes means there are no empty spaces/shelves.

The cross elasticity may be understood as a measure of the responsiveness of demand of a product due to a change in the price of another product. The assortment planning and optimization system 102 according to an implementation of the present subject matter implements cross elasticity, for example, by considering support groups, and assuming 100% demand transfer. In an example, the demand transfer is implemented by defining support groups and specifying the percentage demand transferred to substitution product. The support groups as described herein define a set of products, where each product in the set of products acts as a substitute for one another. If an item in such a support group is not selected for assortment, the demand for that product is assumed to be transferred to the set of selected product items. The amount of demand that is transferred may be specified.

The customer choice sets may be understood as those items in the absence of which the customer leaves the store without buying anything. These products may lead to lost sales and hence need to be present in the retail store. The customer choice sets may be defined in terms of both variety and depth. The customer choice sets may be implemented based on brand loyalty scores with each product hierarchy. The assortment planning and optimization system 102 assigns a minimum variety or number of products to each of these customer choice sets. The assortment planning and optimization system considers the customer choice sets for listing/delisting the products for assortment planning.

The assortment parameter data further includes an assortment strategy. The retailers may define the assortment strategy by choosing one of variety, availability or optimization in a product category as their focus for assortment planning. The retailer may further define various roles for each product hierarchy, and assign various rules to each role.

Returning to the operation of the assortment planning and optimization system 102, once the input information, such as performance data 220 and product data, fixture data, and store data 222, and the assortment parameter data 224 are received, the ranking module 214 ranks the merchandize items based on the input information, i.e., data 220, 222, and the assortment parameter data 224. In an implementation, the ranking module 214 may also refer to one or more predefined business rules for ranking products. Based on the ranking, the products are chosen to be listed for assortment planning.

Ranking

In an implementation, the ranking module 214 compute ranking for each product item, i.e., the merchandize item based on the sum of weighted financial ranking and weighted non-financial ranking. In one implementation, the ranking module 214 computes the weighted financial ranking based on one or more weighted financial terms includes, but not limited to, margin per length of each product, sales per replenishment period of each product, width of the facings, maximum inventory per length, and excess inventory per length. Such a weighted financial ranking when computed considering all of the above mentioned weighted financial terms are referred to as an overall weighted financial ranking. The margin per length referred herein, is conventionally known, and is calculated based on forecasted sales units and price unit cost. Similarly, the sales per replenishment period are estimated based on forecast sales units, replenishment frequency of the product, and total days per year. The width of the facings is calculated based on forecast facings and width of the product. The maximum inventory per length is calculated based on the sales per period, stockout acceptability factor, and sales per replenishment. The excess inventory is calculated based on inventory per length, depth of fixture, depth of product, and width of all the facings.

In one implementation, the various factors as described above can be represented through the following relations:

$$Margin\ per\ length = Forecast\ sales\ units * (Unit\ Price\text{-}Unit\ Cost)$$

*Sales per replenishment period*
$$= \textit{Forecast sales units} * \frac{\textit{Replenishment frequency}}{\textit{Total days per year}}$$

*Width of the facings = Forecast facings * Width of product*

*Maximum Inventory per length = Sales per period + (Stockout acceptability factor) * Standard Deviation,*

*wherein*

*Standard deviation*
$$= \sqrt{\textit{Sales per replenishment} * (1 + \textit{Sales per replenishment} * \textit{accuracy}^2)}$$

*The Excess Inventory per length*
$$= \textit{Inventory per length} - \frac{\textit{Depth of fixture}}{\textit{Depth of product/Width of all facings}}$$

*The overall weighted financial ranking*
$$= \textit{Margin} - \textit{WACC} * \textit{Inventory} - (\textit{Penalty} * \textit{Excess Inventory})$$

In one implementation, the ranking module 214 computes the weighted non-financial ranking based on one or more of the weighted non-financial terms. In one implementation, the weighted non-financial terms include a category rank indicative of weightage assigned to variety for each product item as specified in the customer choice sets, and a category role rank indicative of weightage assigned to priority for each of the product items as specified in the assortment strategy. Such weighted non-financial ranking may be referred as overall weighted non-financial ranking, when computed based on all of the above mentioned weighted non-financial terms.

It is well appreciated by a persona skilled in the art that a category refers to a collection of product items sharing the same or similar functions or attributes. In one implementation, such categories may be formed based on a variety of parameters including the product's brand, size of the products, colors, flavors etc. One or more product items may fall within one or more categories.

In one implementation, the category ranks as indicated above may be calculated as follows: Category 1 rank provides the weights for variety and ranks all the merchandize items present within Category 1. Once this is performed, Category 2 rank provides the weights for variety and ranks all the merchandize items present within Category 1 and Category 2. Similarly, Category 3 rank provides the weights for variety and ranks all the merchandize items present within Category 1, Category 2 and Category 3; and Category 4 rank provides the weights for variety and ranks all the merchandize items present within Category 1, Category 2, Category 3 and Category 4. In said implementation, category role rank may be assigned to some category roles in order to specify the category roles as priority. It would be appreciated by a person skilled in the art that other forms of ranking of merchandize items would also be included within the scope of the present subject matter.

In another implementation, once the products or product items are ranked, the assortment optimization module 108 creates a listing of the product items based on the ranking. The listing may be understood as a list of product items containing a set of listed or accepted product items and a set of delisted or rejected product items. In an implementation, product items are listed or delisted further based on user defined instructions or predefined business rules (also referred as listing/delisting rules) in business rule 226. In one implementation, the process of creating the listing includes associating a Boolean number with each product, for example, in the form of 0's and 1's. The products associated with a Boolean number 1 signify that the product is listed for assortment planning, and the products associated with a Boolean number 0 signify that the product is delisted, thus, not to be considered for assortment planning.

Once the products or merchandize items are ranked (and in some cases some of the products have been listed or delisted), the assortment optimization module 108 generates optimal assortment solutions for the listed products based on various predefined business rules and constraints stored in business rules 226. The rules or predefined business rules and constraints referred throughout the specification may be understood to include various rules that are relevant to the retailer pertaining to assortment planning. The business rules may include strategy rules, product item rules at the product level, product item group rules at the group level, and inventory rules. In said implementation, a priority may be assigned for these rules, such as strategy rules may be assigned with first priority, product rules may be assigned with second priority, inventory rules may be assigned with third priority, and product group rules may be assigned with fourth priority.

In one implementation, a priority can be associated with any one or more of the rules, such as strategy rules are associated with a highest or first priority, second priority for item rules, third priority for inventory rules and lower priority for item group rules. Each of these is briefly described for purposes of illustration only. Other types of rules and their associated priority would still be within the scope of the present subject matter.

In one implementation, the rules 226 may further include one or more strategy rules to enable the retailer to define the strategy by focusing on variety of, inventory for, of the merchandize items. For example, if the retailer's focus is on variety, the assortment planning and optimization system 102 may assign a higher priority to assortment rules, say stored in rules 226. On the other hand, if the retailer's focus is on inventory, the assortment planning and optimization system 102 assigns higher priority to the inventory rules.

The different product rules described herein include maximum and minimum facings, minimum delist, preserve facings and one way complementary. The maximum and minimum facings specify the number of facings that are allowed to be displayed. Minimum delist specifies the minimum number of facings for a product to be listed. Preserve facing enforces that the product is listed with some specified number of facings regardless of performance. One way complementary implies that if product A is listed, then product B should also be listed, but vice-versa is not true. The different group rules considered here includes support groups, dependency list/delist, minimum and maximum products, minimum and maximum space, minimum delist, vendor coverage and one way complementary list/delist.

The rules may be considered either as hard or soft constraints based on user defined instructions. Penalties may be defined if the rules are considered as soft constraints. The minimum unit per facing is an inventory rule, which is assigned a penalty, when not met. The rule sensitivity may also be defined, which would run the assortment solutions by either including or excluding certain rules and display the assortment solutions. In an implementation, users, such as retailers may choose to assign one or more business rules and constraints among the predefined business rules and constraints that need to be assigned to an assortment plan.

Generating Assortment Solutions

Returning to the generation of one or more assortment plans, the assortment optimization module 108 generates optimal assortment solutions for the listed products based on the predefined business rules and constraints. In one implementation, the assortment optimization module 108 generates one or more assortment plans so as to maximize the overall sales margins. In another implementation, this may further include minimizing or reducing an overall cost, which is a function of various cost parameters including, but not limited to, inventory costs, vendor contribution costs, backroom costs, transportation or trucking costs, and penalties.

In an example, if the rules are considered as hard constraints based on user defined instructions, the assortment optimization module 108 considers various space constraints, integrality constraints, and vendor contribution constraints, while assortment planning. In another example, if the rules are considered as soft constraints based on user defined instructions, the assortment optimization module 108 will consider various penalties, such as stockout penalty, lack of strategy penalty, wastage penalty, variety penalty, and display penalty, while assortment planning. In both the examples, the assortment optimization module 108 satisfies various constraints and reduces penalties to obtain maximum overall gross margins for retail stores.

In an implementation, the optimal assortment solutions obtained from the assortment optimization module 108 includes a plurality of assortment solutions, for example, top ten assortment solutions. In one implementation, the generated assortment plans can be stored in assortment plan data 228. In another implementation, the generated assortment plans 226 can be further confirmed for any conflicts based on one or more rules, such as rules available in other data 230.

Such optimal assortment solutions indicate the listed product items that are selected for the assortment planning, units of such listed products, facings for the listed products, the product hierarchy of the listed product, levels in the product hierarchy, the unique identifier corresponding to the cluster for which assortment plan is created, and vendor costs for the listed products. The retailers may therefore choose a best suited solution among the plurality of assortment solutions that satisfies the retailer's need. The obtained optimal assortment solutions may be visualized in a graphical format using a planogram tool.

As would be appreciated by a person skilled in the art, the shelf space allocation problem involves distributing the scarce shelf space available among different products held within a retail store. A product or a merchandize item can be considered to be the smallest management unit within a retail store. A category is a collection of products that have the same or similar functions or attributes. A category contains several brands with each brand having several products, corresponding to different sizes, colors, flavors and/or other properties. The number of the facings of products is the quantity of such products that can be directly seen on the shelves or fixtures by the customers.

In one implementation, the assortment optimization module 108 generated assortment solutions or assortment plans by maximizing the overall sales margins represented by the following relation:

$$Overall\ Sales\ Margin = Sales\ margins - Inventory\ costs - Vendor\ contribution\ costs -$$

$$Backroom\ costs - Transportation\ costs - Penalties$$

In one implementation, the above relation is maximized in order to satisfy the following constraints: Space constraints, Integrality constraints, Vendor contribution constraints. Furthermore, examples of penalties include, but are not limited to Stockout Penalty, Lack of Strategy Penalty, Wastage Penalty, Variety Penalty, and Display Penalty.

As described above, the assortment optimization module 108 utilizes input information such as performance data 220 and product data, fixture data, and store data 222 for generating one or more assortment plans. In one implementation, the following are further parameters that can be included within the input information:

$S_i$ : Sales Margin of merchandize item i

$C_i$ : Cost of merchandize item i per day

$X_i$ : Number of facings of merchandize items i that are displayed

$Y_i$ : Number of additional units of merchandize items

$I_i$ : Total number of units = $X_i + Y_i$

$S_i$ : Number of merchandize items i units sold per day

$S'_i$ : Last year's Sales of merchandize items i displayed

$f_i$ : Forecast sales for merchandize items i displayed

$X'_i$ : Forecast number of facings of merchandize items i

$d_i$ : Days of Supply of the merchandize items i

$J_i$ : Total Lost sales

$B_i$ : Backroom Costper unit merchandize items i

$b_i$ : Number of units of merchandize items i in the backroom

$V_i$ : Volume of merchandize items i

$Kstac_i$ : stacking factor of merchandize items i

$D_j$ : Depth of the fixture j

$L_i$ : Listing binary variable that is 1 if $X_i$ is listed, otherwise 0

$bexess_i$ : excess units of merchandize items i

$Xmin_i$ : Minimum number of facings of merchandize items i

$XminCost$ : Total Cost pertaining to Minimum number of facings of merchandize items i

$StockoutCost$ : Total Cost pertaining to stockout of merchandize items

$StockoutPenalty_i$ : Penalty pertaining to stockout of merchandize items i

$StockoutProbablity_i$ : Probability of Stockout merchandize items i C5 = constant = Variety Bonus constant

$VarietyBonusCost$ : Cost pertaining to Variety Bonus

$VendorContribution\ n_i$ : Vendor contribution pertaining to listing of merchandize items i

$VendorContributionCost$ : Cost pertaining to Vendor contribution of listing of merchandize items i

$GrossMargin$ : Gross Margin for merchandize items for setting period: Total sales margin for all merchandize items

*AverageInventorycost : Total inventory costs for all merchandize items*
*BackroomCost : Total Backroom Costs*

In one implementation, the input information, the product ranking and assortment parameter data are used for generating the assortment plan using a *Genetic Algorithm.* The output of genetic algorithm is the initial set of listings of the products as an n-tuple consisting of 0's and 1's. 1's signify that the product is listed and 0's that they are unlisted.

In one implementation, the mechanism for generating one or more assortment plan is initialized. Upon initialization, one or more genes are generated. The genes can be considered to be composed of a string of 1's and 0's. In one implementation, the length of the string is equal to the number of available merchandize item in a specific category. In such a case, a 1 would indicate that a merchandize item under consideration is present or listed in an assortment, and a 0 would indicate that a merchandize item is not present or delisted in an assortment. In another implementation, the genes obtained upon initialization are based on the ranking performed by the ranking module 214.

Correspondingly, one or more stopping conditions for stopping the generation of genes are also determined. Subsequently, a *call iterate* function is iteratively called to generate the assortment plans or assortment solutions, till the stopping conditions are met. In one implementation, the assortment optimization module 108 implements a series of recombination and mutations of the initial set of genes to generate the plurality of assortment plans. The recombination and mutations can be implemented iteratively, say for a fixed number of iterations or till the stopping conditions are met. The generated assortment plans or the assortment solutions can be displayed to the user.

In one implementation, the generated assortment solutions can be further optimized based on the listing to provide an optimal number of facings and units for the products to be displayed. It should be noted that the assortment solutions obtained will result in higher gross margin dollars, lower average inventory costs and high private label items listed. In another implementation, the optimization is performed by assortment optimization module 108 based on a generalized reduced gradient (GRG) mechanism.

The optimized output displays fixture-wise listed-delisted merchandize items along with the number of facings and number of units each of such items. The optimization output may also display a summary report describing a score card for the assortment so obtained.

Assortment Plan Analysis

In one implementation, once the optimal assortment solutions are obtained, the assortment analysis module 216 enables retailers to perform assortment analysis on the assortment solutions. The retailers may modify one or more parameters included within the input information, such as performance data 220 and product data, fixture data, and store data 222, and/or assortment parameter data 224 considered in the assortment planning, and analyze the effects of such changes on the obtained optimal assortment solutions.

In an example, the retailer may study an impact of changing the list/delist status of the products on the obtained optimal assortment solutions. Such impact, for example, may modify the units and facings in the obtained optimal assortment solutions. Thus, the assortment analysis module 216 makes the assortment planning and optimization system 102 a flexible assortment planning tool for retailer that enables the retailer revise their assortment plan by modifying some of the input information, and/or assortment related parameters and come up with a most relevant assortment solution to address their need.

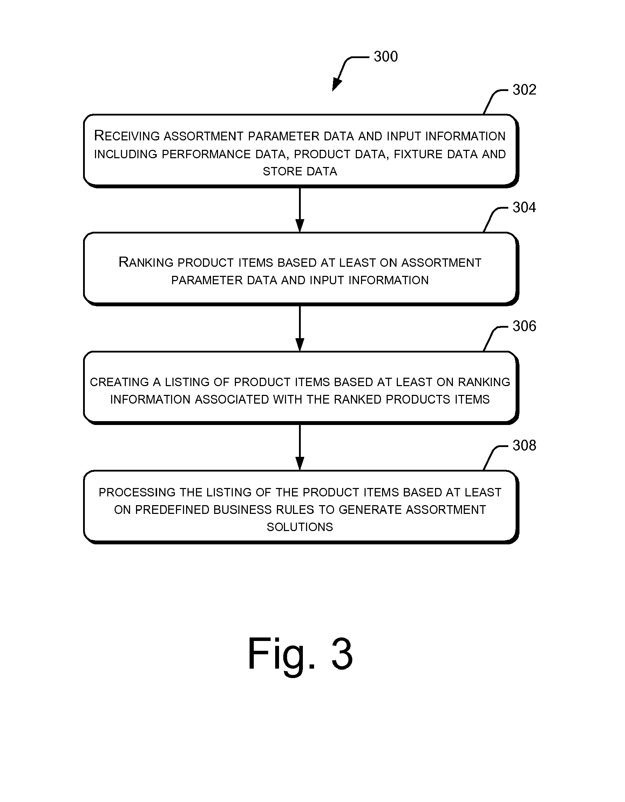

Fig. 3 illustrates a method 300 for assortment planning and optimization, in accordance with an embodiment of the present subject matter. The method 300 may be described in the general context of computer executable instructions. Generally, computer executable instructions can include routines, programs, objects, components, data structures, procedures, modules, functions, etc., that perform particular functions or implement particular abstract data types. The method may also be practiced in a distributed computing environment where functions are performed by remote processing devices that are linked through a communications network. In a distributed computing environment, computer executable instructions may be located in both local and remote computer storage media, including memory storage devices. Some embodiments are also intended to cover both communication network and communication devices configured to perform said steps of the exemplary method.

The order in which method 300 is described is not intended to be construed as a limitation, and any number of the described method blocks can be combined in any order to implement the method, or an alternative method. Additionally, individual blocks may be deleted from the method without departing from the spirit and scope of the subject matter described herein. Furthermore, the methods can be implemented in any suitable hardware, software, firmware, or combination thereof.

The method is initiated at block 302, wherein input information indicating performance data, product data, fixture data, store data, validity period, and the unique identifier corresponding to the cluster of stores is received by an assortment planning and optimization system, such as assortment planning and optimization system 102. In an implementation, the performance data referred herein is the data indicative of the performance of the retail store, and is retrieved from the performance data 220, and the product data, fixture data, and store data is retrieved from the repository product, fixture and store data 222.

The method further involves receiving assortment parameter data, such data or details corresponding to space elasticity, cross elasticity, and customer choice sets in the assortment planning and optimization system. In an implementation, the assortment parameter data is retrieved from a repository assortment parameter data 224 in the assortment planning and optimization system 102.

At block 304, the product items are ranked based on the input information and the assortment parameter data. In an implementation, the ranking module 214 rank the product items based on the input information obtained from performance data 220, product, fixture, and store data 222, and other input information obtained from interface(s) 208. In another implementation, the ranking module 214 ranks the products based on weighted financial ranking and weighted non-financial ranking.

At block 306, a listing of the products items is created based on the ranking information associated with the ranked products. Such a listing of the product items may be understood as a list containing a set of listed or accepted products items for assortment planning, and a set of delisted or rejected product items for assortment planning. For example, the assortment optimization module 108 lists or delists one or more products amongst the ranked products. In one implementation, the product items are listed or delisted further based on predefined business stored in the business rules 226

At block 308, the listing of the products items are processed based on a plurality of predefined business rules and constraints to generate optimal assortment solutions. In an implementation, the assortment optimization module 108 generates a plurality of optimal assortment solutions based on the predefined business rules and constraints stored in the rules 226.

The method may further involve analyzing the obtained optimal assortment solutions by an assortment analysis module, such as assortment analysis module 216 by modifying some of the input information and/or assortment related parameter data, and revise the assortment plan accordingly.

Although embodiments for assortment planning and optimization have been described in language specific to structural features and/or methods, it is to be understood that the invention is not necessarily limited to the specific features or methods described. Rather, the specific features and methods are disclosed as exemplary implementations for the assortment planning and optimization.

## Claims

1. A computer implemented method for assortment planning and optimization, the method comprising:

   receiving assortment parameter data, and input information including performance data, product data, fixture data and store data;
   ranking product items based at least on the assortment parameter data and the input information;
   creating a listing of the product items based at least on the ranking; and
   processing the listing of the product items based at least on predefined business rules, to generate one or more assortment solutions for providing optimal gross margins.

2. The method as claimed in claim 1, wherein the assortment parameter data comprises details corresponding to at least one of space elasticity, cross elasticity, customer choice sets and assortment strategy.

3. The method as claimed in claim 1, wherein the performance data is indicative of one of sales dollars, gross margins and sales units of a retail store, and/or includes one of regular performance details, forecasted performance details, and promotional performance details.

4. The method as claimed in claim 1, wherein the ranking is based on computing a sum of weighted financial ranking computed based on one or more of weighted financial terms, wherein the weighted financial terms include margin per length, sales per replenishment period, width of facings, maximum inventory per length, and excess inventory per length, associated with each of the product items.

5. The method as claimed in claim 1, wherein the ranking is based on computing a sum of weighted non-financial ranking computed based on one or more of weighted non-financial terms, wherein the weighted non-financial terms include a category rank indicative of weightage assigned to variety, and a category role rank indicative of weightage assigned to priority, for each of the product items.

6. The method as claimed in claim 1, wherein the processing further comprising maximizing gross margins and minimizing overall cost, subject to one or more constraints including space constraints, integrality constraints, and vendor contribution constraints.

7. The method as claimed in claim 6, wherein the minimizing the overall cost comprises minimizing one or more of cost parameters including average inventory cost, lost sales cost, backroom cost, stockout cost, wastage cost, vendor contribution cost, minimum facing cost and transportation cost.

8. The method as claimed in claim 1, wherein the method further comprising assigning a priority for the predefined business rules.

9. An assortment planning and optimization system (102) comprising:

a processor (204); and
a memory (206) coupled to the processor (204), the memory (206) comprising:

a ranking module (214) configured to rank product items based at least on assortment parameter data (224), and input information including product, fixture and store data (222), and performance data (220); and
an assortment optimization module (108) configured to:

create a listing of the product items based at least on ranking information associated with the ranked product items; and
process the listing of the product items based at least on predefined business rules (226), to generate one or more optimal assortment solutions for a retail store.

10. The assortment planning and optimization system (102) as claimed in claim 9 further comprises an assortment analysis module (216) configured to revise the generated one or more optimal assortment solutions by modification of at least one of the assortment parameter data (224) and the input information.

11. The assortment planning and optimization system (102) as claimed in claim 9, wherein the assortment optimization module (108) is further configured to generate the one or more optimal assortment solutions for a group of retail stores.

12. The assortment planning and optimization system (102) as claimed in claim 9, wherein the predefined business rules (226) comprises at least one of strategy rules, product item rules, product item group rules, and inventory rules.

13. The assortment planning and optimization system (102) as claimed in claim 9, wherein each of the generated one or more optimal assortment solutions is indicative of at least listed product items, units of the listed product items, number of facings, and a product hierarchy of the listed product items.

14. A computer-readable medium having embodied thereon a computer program for executing a method comprising:

receiving assortment parameter data, and input information including performance data, product data, fixture data and store data;
ranking product items based at least on the assortment parameter data and the input information;
creating a listing of the product items based at least on the ranking; and
processing the listing of the product items based at least on predefined business rules, to generate one or more assortment solutions.

15. The computer-readable medium method as claimed in claim 14, wherein the processing generates the one or more assortment solutions that maximizes overall gross margins and minimizes one or more of cost parameters including average inventory cost, lost sales cost, backroom cost, stockout cost, wastage cost, vendor contribution cost, and transportation cost.

Fig. 1

ASSORTMENT PLANNING AND OPTIMIZATION SYSTEM 102

PROCESSOR(S)
204

INTERFACE(S)
208

MEMORY 206

MODULE(S) 210

RANKING MODULE 214

ASSORTMENT OPTIMIZATION MODULE 108

ASSORTMENT ANALYSIS MODULE 216

OTHER MODULE(S) 218

DATA 212

PERFORMANCE DATA 220

PRODUCT, FIXTURE AND STORE DATA 222

ASSORTMENT PARAMETER DATA 224

BUSINESS RULES 226

ASSORTMENT PLAN DATA 228

OTHER DATA 230

Fig. 2

┌─ 300

┌─ 302
┌────────────────────────────────────────────────────┐
│ RECEIVING ASSORTMENT PARAMETER DATA AND INPUT INFORMATION │
│ INCLUDING PERFORMANCE DATA, PRODUCT DATA, FIXTURE DATA AND │
│ STORE DATA │
└────────────────────────────────────────────────────┘

┌─ 304
┌────────────────────────────────────────────────────┐
│ RANKING PRODUCT ITEMS BASED AT LEAST ON ASSORTMENT │
│ PARAMETER DATA AND INPUT INFORMATION │
└────────────────────────────────────────────────────┘

┌─ 306
┌────────────────────────────────────────────────────┐
│ CREATING A LISTING OF PRODUCT ITEMS BASED AT LEAST ON RANKING │
│ INFORMATION ASSOCIATED WITH THE RANKED PRODUCTS ITEMS │
└────────────────────────────────────────────────────┘

┌─ 308
┌────────────────────────────────────────────────────┐
│ PROCESSING THE LISTING OF THE PRODUCT ITEMS BASED AT LEAST │
│ ON PREDEFINED BUSINESS RULES TO GENERATE ASSORTMENT │
│ SOLUTIONS │
└────────────────────────────────────────────────────┘

# Fig. 3

| | Europäisches Patentamt European Patent Office Office européen des brevets | **EUROPEAN SEARCH REPORT** | Application Number EP 12 18 1903 |
| --- | --- | --- | --- |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| L | EPO: "Notice from the European Patent Office dated 1 October 2007 concerning business methods", OFFICIAL JOURNAL OF THE EUROPEAN PATENT OFFICE, EPO, MUNCHEN, DE, vol. 30, no. 11, 1 November 2007 (2007-11-01), pages 592-593, XP007905525, ISSN: 0170-9291 * The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. * ----- | 1-15 | INV. G06Q30/02 |
| | | | TECHNICAL FIELDS SEARCHED (IPC) |
| | | | G06Q |

The present search report has been drawn up for all claims

| Place of search | Date of completion of the search | Examiner |
| --- | --- | --- |
| The Hague | 21 December 2012 | De Smet, Michaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................
& : member of the same patent family, corresponding document

EPO FORM 1503 03.82 (P04C01)